# FASCICULE DE BREVET EUROPEEN

(11) **EP 2 762 547 B1**
(45) Date de publication et mention de la délivrance du brevet: **27.05.2015**
(21) Numéro de dépôt: 14151833.2
(22) Date de dépôt: 20.01.2014
(51) Int. Cl.: C09K 11/65, C09D 11/00

(54) **Particules luminescentes de carbone, procédé de préparation et utilisation**
Kohlenstoff-Leuchtstoffpartikeln, ihr Herstellungsverfahren und ihre Verwendung
Luminescent particles of carbon, method for preparing same and use thereof

(30) Priorité: 31.01.2013 FR 1350839
(43) Date de publication de la demande: 06.08.2014
(73) Titulaire: COMMISSARIAT A L'ENERGIE ATOMIQUE ET AUX ENERGIES ALTERNATIVES, 75015 Paris (FR)
(72) Inventeur: AUGER, Aurélien, 72000 LE MANS (FR); CAPRON, Philippe, 38730 VIRIEU SUR BOURBRE (FR); CHARVET, Nicolas, 38340 VOREPPE (FR)
(74) Mandataire: Cabinet Laurent & Charras

(56) Documents cités:
- WO-A1-2012/158478
- WO-A2-2007/050984
- WO-A2-2010/008519
- US-A1- 2006 112 858
- US-A1- 2010 181 534

## Description

### DOMAINE DE L'INVENTION

L'invention concerne des particules de carbone luminescentes pouvant notamment être mises en oeuvre dans le domaine de la lutte anti-contrefaçon.

### ETAT ANTERIEUR DE LA TECHNIQUE

La luminescence correspond à l'émission de lumière de manière rapide (fluorescence) ou plus lente (phosphorescence) suite à l'absorption de photons par une molécule ayant été préalablement excitée.

Les particules luminescentes peuvent être incorporées au sein d'une encre permettant ainsi le marquage d'objets. Elles peuvent donc apporter un moyen d'identification, généralement invisible à l'oeil nu, dont la détection peut requérir une longueur d'onde d'excitation spécifique.

C'est notamment le cas des particules fluorescentes.

Les propriétés fluorescentes des particules de composition homogène de l'art antérieur sont généralement conférées lors de leur synthèse. Toutefois, cette solution n'est pas adaptée pour la préparation d'encres noires qui absorbent toute les longueurs d'onde d'excitation. La fluorescence des particules de l'art antérieur est donc annihilée lorsque ces dernières sont utilisées pour préparer une encre noire, l'énergie d'excitation étant absorbée par la couleur noire.

Afin de répondre à cette problématique, des particules métalliques présentant une structure de type coeur/coquille ont été développées. Il s'agit notamment de particules cobalt/carbone, dont la coquille carbone a été fonctionnalisée en surface au moyen de groupements hybrides tels que l'association pyrène / BODIPY.

Les groupements BODIPY, responsables de la fluorescence, sont ainsi éloignés du coeur de la particule afin d'éviter les phénomènes de « *quenching* » (désactivation) de la fluorescence.

Toutefois, ces particules nécessitent un procédé de synthèse fastidieux eu égard aux étapes de préparation des particules métalliques, d'enrobage des particules métalliques, et de fonctionnalisation de l'enrobage au moyen d'un mélange hybride de composés. Il s'agit d'une synthèse multi étape onéreuse.

Le Demandeur a mis au point des particules luminescentes de carbone permettant la préparation d'une encre noire aux propriétés luminescentes.

En outre, le procédé de préparation de ces particules permet d'adapter la nature de la surface de ces particules à leur utilisation, sans pour autant nécessiter d'étape de fonctionnalisation complexe.

Le document WO 2007/050984 décrit des particules photoluminescentes. Ces particules comprennent une particule nanométrique ayant un noyau (coeur) de carbone et un agent de passivation lié à la surface de la nanoparticule. L'agent de passivation peut être, par exemple, une matière polymère et il peut former un revêtement externe polymérique sur la surface du coeur. Ledit agent de passivation peut également être soumis à une dérivatisation en vue d'applications particulières. Par exemple, les nanoparticules de carbone photoluminescentes peuvent être soumises à une dérivatisation en vue d'une reconnaissance et d'une liaison à une matière cible, telle qu'une matière biologiquement active, un polluant ou un récepteur de surface sur un tissu ou une surface cellulaire, notamment dans un protocole de marquage ou de coloration.

### EXPOSE DE L'INVENTION

Le Demandeur a mis au point des particules de carbone luminescentes présentant une structure coeur/coquille. Ces particules sont avantageusement de couleur noire, c'est-à-dire de la même couleur que le carbone. En d'autres termes, même si le coeur des particules absorbe tout rayonnement optique et donc toute énergie d'excitation, ces particules présentent néanmoins des propriétés luminescentes.

La luminescence est due à des luminophores dans la partie coquille des particules.

Plus précisément, la présente invention concerne une particule de carbone luminescente présentant :
- un coeur en carbone ;
- un revêtement externe polymérique contenant au moins un luminophore.

Plus particulièrement, l'invention concerne également un nanomatériau formé par un agglomérat d'une pluralité de particules de carbone à structure coeur/coquille.

Par agglomérat de particules on entend un nanomatériau formé par l'agglomération desdites particules de carbones. Ainsi selon l'invention, l'agglomérat comprend une pluralité de particules de carbone luminescentes revêtues d'un matériau polymérique externe comprenant au moins un luminophore, lesdites particules étant liées entres elles grâce au matériau polymérique.

La particule en carbone luminescente, ainsi que l'agglomérat, comprend avantageusement, en poids par rapport au poids de la particule :
- 60 à 90 % de carbone (coeur de la particule) ;
- 5 à 20 % de polymère ;
- 5 à 20 % de luminophore.

Le coeur de la particule en carbone est avantageusement du noir de carbone ou du graphite.

De manière avantageuse, les particules de carbone de l'invention présentent une forme sphérique. Leur diamètre est préférentiellement compris entre 10 et 500 nm, plus avantageusement encore entre 20 et 100nm.

De manière avantageuse, les agglomérats de particules de carbone selon l'invention présentent une forme sphérique. Leur diamètre est préférentiellement compris entre 0,1 et 10 millimètres, plus avantageusement encore entre 1 et 8 millimètres.

Le coeur en carbone de la particule présente un diamètre avantageusement compris entre 10 et 500 nanomètres, alors que l'épaisseur du revêtement externe (coquille) est préférentiellement comprise entre 1 et 20 nanomètres.

De manière générale, le revêtement polymérique comprend au moins un polymère pouvant être choisi dans le groupe comprenant le poly(allylamine hydrochlorure), tel que le composé de formule CAS 71550-12-4 par exemple ; l'acide polyacrylique ; l'alcool polyvynilique ; le PVP (le polyvynil pyrolidone) ; le PEO (Polyethyl oxazoline) ; le PEI (polyethylene imine) ; le PEG (polyethylene glycol) ; le PMMA (polymethacrylate de méthyle) ; le poly(methyl vinyl ether-alt-maleic anhydride) ; le poly(maleic anhydride -alt-1-octadecen) ; et leurs mélanges.

Ce polymère peut être hydrosoluble ou hydrophobe.

Comme déjà indiqué, la particule de carbone luminescente présente la couleur du coeur en carbone. En d'autres termes, le revêtement est transparent ou quasi transparent.

En ce qui concerne le luminophore, il peut être avantageusement choisi dans le groupe comprenant le 1-pyrene acide carboxylique (fluorophore) ; l'anthracène ; la fluoresceine ; la rhodamine ; les cyanines ; le 1-pyrene boronic acid ; le 7-diethylamino-4-methylcoumarin ; leurs dérivés ; et leurs mélanges.

Le luminophore, avantageusement un fluorophore, présente également une charge ionisable ou une affinité chimique avec les particules de carbone. Par affinité chimique, on entend notamment les forces électrostatiques, les forces de Van der Waals, ou les assemblages π-π. Contrairement aux particules de l'art antérieur, la particule - objet de l'invention, ne nécessite pas de fonctionnalisation, le luminophore est contenu/encapsulé au sein du revêtement polymérique.

La particule - objet de l'invention est avantageusement fluorescente.

La présente invention concerne également une encre comprenant la particule de carbone luminescente décrite ci-avant ou un agglomérat de ces particules. Il s'agit d'une suspension dans l'encre, le polymère reste accroché à la particule et permet la solubilité dans le solvant de l'encre qui peut-être aqueux ou organique (comme la MEK : méthyl éthyl cétone, l'acétone, l'ethanol,...).

L'encre est avantageusement de la même couleur que le coeur des particules et/ou de l'agglomérat de ces particules, c'est-à-dire noire.

Le procédé de préparation de la particule de carbone luminescente et/ou d'un agglomérat de ces particules, comprend les étapes suivantes :
- préparation d'une suspension (aqueuse ou organique) comprenant au moins des particules de carbone, et au moins un polymère ;
- addition d'au moins un luminophore à cette suspension ;
- formation de particules luminescentes de carbone et/ou d'un agglomérat de ces particules, par trempe thermique goutte à goutte de ladite suspension, à une température avantageusement comprise entre -200 et -180 °C, plus avantageusement encore dans de l'azote liquide (-196 °C) ;
- lyophilisation des particules.

Ainsi, le luminophore peut être réparti de manière homogène au sein de la couche polymérique recouvrant le coeur en carbone des particules de l'invention.

Le procédé à base de trempe, de préférence dans l'azote liquide, puis de lyophilisation permet de créer un nanomatériau formé d'un agglomérat de particules, qui présente entre chaque particule élémentaire de carbone, le polymère qui contient par ailleurs le luminophore.

La suspension mise en oeuvre dans ce procédé comprend avantageusement, en poids par rapport au poids sec de la suspension :
- 60 à 90 % de particules de carbone ;
- 5 à 20 % de polymère ;
- 5 à 20 % de luminophore.

L'étape de trempe thermique consiste à refroidir brusquement la suspension, notamment dans un bain d'azote liquide. L'environnement surfacique des particules de carbone est ainsi figé.

Préférentiellement, la suspension est introduite goutte à goutte dans l'azote liquide. La taille des gouttes permet de régler la taille de l'agglomérat qui sera obtenu après lyophilisation.

Les particules de carbone initialement mises en oeuvre dans le cadre de ce procédé peuvent être broyées, préalablement à l'enrobage et selon les techniques faisant partie des connaissances générales de l'homme du métier. Ce n'est qu'ensuite qu'elles sont mélangées à au moins un solvant véhicule (organique ou aqueux) pour préparer la suspension mise en oeuvre dans la première étape.

Une base (ammoniaque par exemple) ou un acide peut ensuite être ajouté, notamment lorsqu'il s'agit d'un milieu aqueux, avant ou après addition du luminophore. Cela permet ainsi d'ioniser le luminophore qui peut alors se confiner dans le revêtement polymérique recouvrant le coeur de la particule.

Le solvant véhicule peut notamment être choisi dans le groupe comprenant l'eau ; le DMF ; Le DMSO ; et l'éthanol.

De manière avantageuse, la suspension présente un rapport en poids particule de carbone / luminophore supérieur ou égal à 4, encore plus avantageusement supérieur à 10. En effet, lorsque le rapport en poids particule de carbone / luminophore est trop faible, des particules polymériques fluorescentes (ne présentant pas de coeur en carbone) peuvent être produites.

En outre, ces particules de carbone (non luminescentes) représentent avantageusement entre 60 et 90 % par rapport au poids de la suspension mise en oeuvre dans ce procédé.

La présente invention concerne également un objet comprenant la particule de carbone luminescente décrite ci-avant.

Le procédé de préparation de cet objet consiste à déposer sur un substrat, une encre contenant des particules luminescentes présentant un coeur en carbone et un revêtement externe polymérique contenant au moins un luminophore. Il peut s'agir d'un substrat en verre, papier, carton, métal, plastique par exemple. En outre, et comme déjà indiqué, l'encre peut comprendre un agglomérat de particules.

Ce dépôt s'apparente à une étape de marquage. Il est avantageusement effectué par impression jet d'encre, sérigraphie, offset...

Les objets ainsi marqués peuvent notamment trouver une application dans le cadre de la lutte anti-contrefaçon. Ce marquage peut révéler un motif identifiable, par exemple par spectroscopie de fluorescence, par excitation spécifique du marquage.

L'invention et les avantages qui en découlent ressortiront mieux des figures et exemples suivants donnés afin d'illustrer l'invention et non de manière limitative.

### DESCRIPTION DES FIGURES

La figure 1 illustre une particule de carbone luminescente selon l'invention.
La figure 2 illustre le profil de la distribution de taille de particules de carbone broyées selon l'art antérieur, avant leur mise en oeuvre dans le cadre du procédé - objet de l'invention.
La figure 3 illustre les longueurs d'onde d'émission (a) et d'excitation (b) de particules luminescentes selon l'invention.

### EXEMPLES DE REALISATION DE L'INVENTION

### Préparation de particules de carbone luminescentes :

0.25 g de poly(allylamine hydrochloride) (PAA ; M_{w} 15000 ; numéro CAS 71550-12-4) sont ajoutés à 300 mL d'eau déionisée.

Le mélange résultant est agité à température ambiante jusqu'à totale dissolution du polymère.

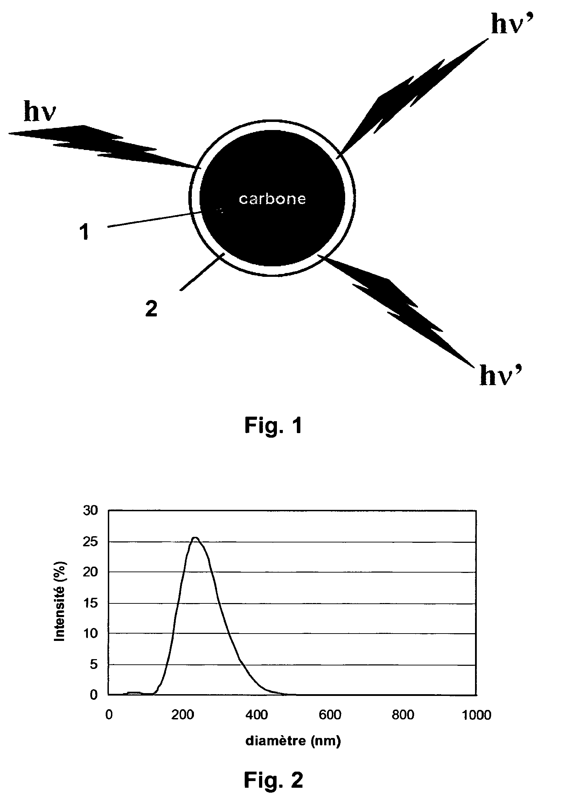

Ensuite, 1 g de particules de carbone finement broyées (figure 2) sont ajoutés à la solution polymérique. Cette suspension présente ainsi un rapport en poids carbone/PAA égal à 4.

Ce mélange est agité à température ambiante jusqu'à obtention d'une suspension de couleur noire.

0.20 g de luminophore 1-pyrene acide carboxylique (20% en poids par rapport au poids des particules de carbone) sont ajoutés sous vive agitation à la suspension.

20 gouttes d'ammoniaque aqueuse (30% en poids) sont ensuite ajoutées.

Une suspension homogène est obtenue après 15 minutes d'agitation à température ambiante. Cette vive agitation est maintenue pendant 6 heures.

La suspension est ensuite trempée dans de l'azote liquide (T = - 196 °C) au goutte à goutte de manière à former des billes qui sont filtrées, puis lyophilisées (24 h, T= - 50 °C, P = 50 torr).

Le matériau obtenu après lyophilisation se présente sous la forme de billes noires d'environ 5 millimètres de diamètre (agglomérat des particules élémentaires).

Une particule de carbone luminescente est schématisée sur la figure 1. La particule présente un coeur (1) en carbone recouvert d'une couche (2) polymérique luminescente.

Le rendement du procédé est de 97%, soit 1.404 g par rapport aux particules de carbone non luminescentes mises en oeuvre dans le procédé.

Le matériau peut être dispersé dans une encre.

Ces particules initiales de carbone ont été caractérisées en DLS (diffusion dynamique de la lumière) après broyage (diamètre moyen 220 nanomètres) (figure 2).

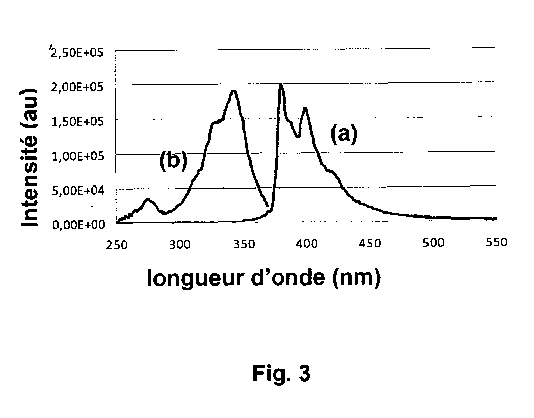

Les particules de carbone luminescentes selon l'invention ont été caractérisées par spectroscopie de fluorescence. Elles présentent une longueur d'onde d'excitation λₑₓ = 343 nm, et une longueur d'onde d'émission λₑₘ = 380 nm (figure 3).

Les énergies d'excitation hv et d'émission hv' sont schématisées sur la figure 1.

## Revendications

1. Particule de carbone luminescente présentant :
- un coeur (1) en carbone ;
- un revêtement (2) externe polymérique contenant au moins un luminophore.

2. Particule de carbone luminescente selon la revendication 1, ***caractérisée* en ce que** le revêtement polymérique comprend au moins un polymère choisi dans le groupe comprenant le poly(allylamine hydrochlorure) ; l'acide polyacrylique, l'alcool polyvynilique ; le polyvynil pyrolidone ; le polyethyl oxazoline ; le polyethylene imine ; le polyethylene glycol ; le polymethacrylate de méthyle ; le poly(methyl vinyl ether-alt-maleic anhydride) ; le poly(maleic anhydride-alt-1-octadecen) ; et leurs mélanges

3. Particule de carbone luminescente selon la revendication 1 ou 2, ***caractérisé* en ce que** le luminophore est choisi dans le groupe comprenant le 1-pyrene acide carboxylique ; l'anthracène ; la fluoresceine ;la rhodamine ; les cyanines ; le 1-pyrene boronic acid ; le 7-diethylamino-4-methylcoumarin ; leurs dérivés ; et leurs mélanges.

4. Particule de carbone luminescente selon l'une des revendications 1 à 3, ***caractérisé* en ce qu'**elle est fluorescente et se présente sous forme sphérique avec un diamètre compris entre 10 et 500 nm, plus avantageusement encore entre 20 et 100nm.

5. Agglomérat comprenant une pluralité de particules de carbone luminescentes selon une des revendications précédentes.

6. Encre comprenant la particule de carbone luminescente objet de l'une des revendications 1 à 4, ou un agglomérat de ces particules.

7. Encre selon la revendication 6, ***caractérisée* en ce qu'**elle est noire.

8. Procédé de préparation de particules de carbone luminescentes objet de l'une des revendications 1 à 4 et/ou d'un agglomérat de ces particules, selon les étapes suivantes :
- préparation d'une suspension comprenant au moins des particules de carbone, et au moins un polymère ;
- addition d'au moins un luminophore à cette suspension ;
- formation de particules de carbone luminescentes et/ou d'un agglomérat de ces particules par trempe thermique goutte à goutte de ladite suspension, à une température avantageusement comprise entre -200 et -180°C ;
- lyophilisation des particules.

9. Procédé selon la revendication 8, ***caractérisé* en ce que** la suspension présente un rapport en poids particule de carbone / luminophore supérieur ou égal à 4.

10. Objet comprenant la particule selon l'une des revendications 1 à 4.

11. Procédé de préparation de l'objet selon la revendication 10, consistant à déposer sur un substrat, une encre contenant des particules luminescentes présentant un coeur en carbone et un revêtement externe polymérique contenant au moins un luminophore.

## Patentansprüche

1. Lumineszierendes Kohlenstoffteilchen, Folgendes aufweisend:
- einen Kern (1) aus Kohlenstoff;
- eine äußere Polymerbeschichtung (2), die mindestens einen Luminophor enthält.

2. Lumineszierendes Kohlenstoffteilchen nach Anspruch 1, **dadurch gekennzeichnet, dass** die Polymerbeschichtung mindestens ein Polymer umfasst, das aus der Gruppe ausgewählt ist, die Poly(allylaminhydrochlorid); Polyacrylsäure, Polyvinylalkohol; Polyvinylpyrrolidon; Polyethyloxazolin; Polyethylenimin; Polyethylenglycol, Methylpolymethacrylat; Poly(methylvinylether-alt-maleinanhydrid); Poly(maleinanhydrid-alt-1-octadecen) und deren Gemische umfasst.

3. Lumineszierendes Kohlenstoffteilchen nach Anspruch 1 oder 2, **dadurch gekennzeichnet, dass** der Luminophor aus der Gruppe ausgewählt ist, die 1-Pyren-Carbonsäure; Anthrazen; Fluoreszin; Rhodamin; Cyanine; 1-Pyren-Boronsäure; 7-Diethylamin-4-methylcumarin; deren Derivate und deren Gemische umfasst.

4. Lumineszierendes Kohlenstoffteilchen nach einem der Ansprüche 1 bis 3, **dadurch gekennzeichnet, dass** es fluoreszierend ist und sich in Kugelform mit einem Durchmesser zwischen 10 und 500 nm, noch vorteilhafter zwischen 20 und 100 nm darstellt.

5. Agglomerat, umfassend eine Vielzahl von lumineszierenden Kohlenstoffteilchen nach einem der vorhergehenden Ansprüche.

6. Tinte, umfassend das lumineszierende Kohlenstoffteilchen, das den Gegenstand eines der Ansprüche 1 bis 4 bildet, oder ein Agglomerat dieser Teilchen.

7. Tinte nach Anspruch 6, **dadurch gekennzeichnet, dass** sie schwarz ist.

8. Verfahren zur Herstellung von lumineszierenden Kohlenstoffteilchen, die den Gegenstand eines der Ansprüche 1 bis 4 bilden, und/oder eines Agglomerats dieser Teilchen, gemäß den folgenden Schritten:
- Zubereiten einer Suspension, die zumindest Kohlenstoffteilchen und mindestens ein Polymer umfasst;
- Zugeben mindestens eines Luminophors zu dieser Suspension;
- Ausbilden von lumineszierenden Kohlenstoffteilchen und/oder eines Agglomerats dieser Teilchen durch tropfenweises thermisches Abschrecken der Suspension auf eine Temperatur, die vorteilhafter Weise zwischen -200 und -180°C beträgt;
- Lyophilisation der Teilchen.

9. Verfahren nach Anspruch 8, **dadurch gekennzeichnet, dass** die Suspension eine Gewichtsverhältnis Kohlenstoffteilchen/Luminophor von über oder gleich 4 aufweist.

10. Gegenstand, das Teilchen nach einem der Ansprüche 1 bis 4 umfassend.

11. Verfahren zum Herstellen eines Gegenstands nach Anspruch 10, das darin besteht, auf einem Substrat eine Tinte abzuscheiden, die lumineszierende Teilchen enthält, die einen Kern aus Kohlenstoff und eine äußere Polymerbeschichtung aufweisen, die mindestens einen Luminophor enthält.

## Claims

1. Luminescent carbon particle with:
- a carbon core (1);
- an external polymeric coating (2) containing at least one luminophore.

2. Luminescent carbon particle according to claim 1, ***characterized* in that** the polymeric coating includes at least one polymer chosen from the group including poly(allylamine hydrochloride); polyacrylic acid; polyvinyl alcohol; polyvynil pyrolidone; polyethyl oxazoline; polyethylene imine; polyethylene glycol; methyl polymethacrylate; poly(methyl vinyl ether-alt-maleic anhydride); poly(maleic anhydride -alt-1-octadecen); and their mixtures.

3. Luminescent carbon particle accordig to claims 1 or 2, ***characterized* in that** the luminophore is chosen from the group including 1-pyrene carboxylic acid; anthracene; fluoresceine; rhodamine; cyanines; 1- pyrene boronic acid; 7-diethylamino-4-methylcoumarin; their derivatives; and their mixtures.

4. Luminescent carbon particle according to one of claims 1 to 3, ***characterized* in that** said particle is fluorescent and is spherical in shape, with a diameter between 10 and 500 nanometers, and more advantageously between 20 and 100 nanometers.

5. Agglomerate including multiple luminescent carbon particles according to one of the preceding claims.

6. Ink containing the luminescent carbon particle according to one of claims 1 to 4, or an agglomeration of these particles.

7. Ink according to claim 6, ***characterized* in that** said ink is black.

8. Method for preparation of luminescent carbon particles as claimed in one of claims 1 to 4, and/or an agglomeration of these particles, comprising the following steps:
▪ preparation of a suspension including at least one of the carbon particles and at least one polymer;
▪ addition of at least one luminophore to this suspension;
▪ formation of luminescent carbon particles and/or an agglomeration of these particles by drop-by-drop tempering of the said suspension, at a temperature advantageously between -200 and -180°C;
▪ lyophilization of the particles.

9. Method according to claim 8, ***characterized* in that** the suspension has a ratio in weight of carbon particles to luminophores of 4 or more.

10. Object containing the particle according to one of claims 1 to 4.

11. Method for the preparation of the object according to claim 10 consisting in deposing, on a substrate, an ink containing luminescent particles with a carbon core and an external polymeric coating containing at least one luminophore.
